# EUROPEAN PATENT SPECIFICATION

(11) **EP 2 522 496 B1**
(45) Date of publication and mention of the grant of the patent: **01.03.2017**
(21) Application number: 12167318.0
(22) Date of filing: 09.05.2012
(51) Int. Cl.: B29D 30/72, B60C 1/00, B60C 13/04, C08L 7/00, C08L 23/16, C08L 23/28

(54) **Method for manufacturing a tire with a colored sidewall and tire with a colored sidewall**
Verfahren zur Herstellung eines Reifens mit einer gefärbten Seitenwand und Reifen mit einer gefärbten Seitenwand
Procédé de fabrication d'un pneu avec une paroi latérale colorée et pneu avec une paroi latérale colorée

(30) Priority: 10.05.2011 NL 2006749
(43) Date of publication of application: 14.11.2012
(73) Proprietor: Apollo Vredestein B.V., 7547 RD Enschede (NL)
(72) Inventor: Reuvekamp, Louis-Philippe Antoine Eugène Maria, 7546 GE Enschede (NL); Bremmer, Paulus, 7523 AH Enschede (NL)
(74) Representative: Patentwerk B.V.

(56) References cited:
- EP-A1- 0 522 781
- US-A- 3 769 123
- US-A- 4 170 503
- US-A- 5 964 969
- US-A1- 2004 198 890
- US-A1- 2011 048 613
- US-B1- 6 923 879

## Description

### TECHNICAL FIELD

The invention resides in the art of the manufacture of pneumatic tires and, more particularly, to the manufacture of such tires having colored sidewalls. Specifically, the invention relates to a method that disposes a colored strip onto the sidewall of a tire during the tire curing process.

### BACKGROUND ART

The manufacture of vehicle tires is significantly complicated when it is desired to impart white or colored bands into the tire sidewall to form a so-called white or colored sidewall tire. Presently, this is accomplished by a method that involves the extrusion and calendering of a number of black and colored rubber components that are subsequently combined into a colored sidewall pre-assembly. All of the tire components, including the tire sidewall pre-assembly, are then applied in sequence to the tire building drum to form the green or uncured tire. Following the tire curing operation, the colored sidewall side of the tire is carefully ground and buffed to expose the colored sidewall area which was previously protected by a cover strip. Such a method is for instance disclosed in US 3,769,123, wherein a colored sub-surface layer is provided in a sidewall of a green tire, and a surface layer provided over the sub-surface layer. After curing, the outer surface of the sidewall is ground slightly to expose the sub-surface layer on ribs formed in the tire, while leaving the surface layer in the bases of depressions between the ribs. The ribs then form colored letters or other signs.

Similar methods, comprising the use of a cover layer that is subsequently removed, are disclosed in EP 0522781A1 and US 2011/0048613A1.

These complex steps detrimentally effect the efficiency of the tire manufacturing process. Further, many interfaces produced in the construction of the colored sidewall tire effect the structural integrity of the tire and its durability and performance on the road, each boundary presenting an area for the development of a potential defect.

It is generally known in the tire industry that the tire sidewalls used for forming a normal black walled tire are different from those employed in manufacturing tires having decorative features or "white sidewalls" thereon. Further, it is desirable to design tires with increasingly thinner sidewalls. However, the colored portion of the sidewall then represents an increasingly significant part of the tire sidewall structure itself. This is in general not desirable since the colored portion typically shows less than optimum properties as a structural element.

It is generally known in the tire industry that the tire sidewalls used for forming a normal black walled tire are different from those employed in manufacturing tires having decorative features or "white sidewalls" thereon. Further, it is desirable to design tires with increasingly thinner sidewalls. However, the colored portion of the sidewall then represents an increasingly significant part of the tire sidewall structure itself. This is in general not desirable since the colored portion typically shows less than optimum properties as a structural element.

US 4,170,503 dating back to 1979, describes a generally interesting method, however it does not relate to the modern types of rubber compounds that are used for sidewalls nowadays.

In order to obviate the above shortcomings, it has also been proposed to replace the previously known sidewall colored features with layers of polymeric paint applied to normal black walled tires after the curing operation of the tire, such as disclosed in US 4,767,481 for instance. The paint layers are quite thin and, accordingly, susceptible to damage like scrapping, which destroys the decorative function.

The known methods also provide white sidewalls that are susceptible to discoloration. For this reason, the decorative portions are typically small in size and confined to relatively smalls strips in the radial direction of the tire. This represents another serious limitation, especially with the new tires that tend to have a limited radial width to leave more room for the (decorative) rims used increasingly nowadays.

### DISCLOSURE OF INVENTION

In light of the foregoing, it is an objective of the present invention to provide a method for manufacturing a tire having a colored sidewall that is cost effective, is increasingly resistant to discoloration and can be made large enough to be able to mark it with marks of relatively large size.

According to one aspect of the invention, a method of manufacturing a tire having a colored sidewall is provided, the method comprising disposing a strip of a colored rubber compound circumferentially about the external surface of the sidewall region of the tire in its uncured state, placing the uncured tire in a tire curing mold with the strip exposed to direct contact with the mold, whereby the mold is provided with circumferential recesses at both sides of the rubber strip and the strip slightly overlaps with the recesses in the radial direction of the tire, curing the tire whereby circumferential side parts of the strip flow into the recesses to form circumferential protrusions in the strip, removing the tire from the mold, and removing the protrusions at least partially characterized in that
the sidewall (10) is made of a rubber composition comprising from 5-30 wt% of EPDM rubber, from 5-30 wt% of halobutyl rubber, preferably chlorobutyl rubber, from 5-30 wt% of natural rubber, and from 5-30 wt% of butadiene rubber on a total of 100 wt%, the remaining wt% comprising pigments and other additives, and vulcanization chemicals and aids.

According to an exemplary embodiment of the method according to the invention removing the protrusions is performed by cutting.

According to still another aspect of the invention, a method is provided wherein the strip of colored rubber compound is disposed to cover at least 50% of the external surface of the sidewall region of the tire maintaining a minimum distance to the wing tip of the tire of 5 mm. More preferred is a method wherein the strip of colored rubber compound is disposed to cover at least 75% of the external surface of the sidewall region of the tire maintaining a minimum distance to the wing tip of the tire of 5 mm

Another aspect of the invention relates to a method wherein the thickness of the side wall rubber layer underneath the colored rubber strip between the carcass layer and the underside of the colored rubber strip is lower than 5 mm, and more preferred is lower than 2 mm. Such embodiments of the invention provide a very useful combination of a relatively low rolling resistance, a low weight, low material costs, a better riding comfort and/or a faster production of the tire.

In yet another aspect of the invention, a method is provided wherein the strip of colored rubber compound is formed by winding a plurality of colored rubber bands circumferentially about the external surface of the sidewall region of the tire in close proximity to each other, and preferably in touching proximity to each other.

Still another aspect of the invention provides a method wherein the bands are urged to change shape by stretching an outer circumferential edge of each band without stretching an inner circumferential edge thereof.

The embodiments of the method according to the invention allow to produce a vehicle tire having several desirable properties.

The rubber compounds used in the tire components may be synthetic rubbers or natural rubber and blends thereof. Examples of synthetic rubbers include ethylene-propylene-diene copolymer rubber (EPDM), polyisoprene rubber (IR), polybutadiene rubber (BR), styrene-butadiene rubber (SBR), butyl rubber, and halogenated butyl rubber. Among these rubbers, SBR, such as SBR obtained by emulsion polymerization and SBR obtained by solution polymerization are preferably used. Typical fillers used in conductive parts of the tire comprise carbon black and/or ionic salts in amounts sufficient to obtain a specific resistance lower than 10⁶ Ω.cm³. Silane coupling agent may be used if desired, as well as other ingredients generally used in the rubber industry, such as zinc oxide, stearic acid, antioxidants, wax, and vulcanizing agents, within a range such the advantages of the present invention are not adversely affected.

In one aspect of the invention, the colored strip is made of a rubber composition, comprising EPDM rubber, halobutyl rubber compound, preferably chlorobutyl rubber compound, and natural rubber. Particularly preferred is a rubber composition for the colored strip comprising from 1-10 wt% of EPDM rubber, from 10 -30 wt% of halobutyl rubber, preferably chlorobutyl rubber, and from 15-35 wt% of natural rubber on a total wt% of 100 wt%, the remaining wt% comprising pigments and other additives, and vulcanization chemicals and aids.

In yet another aspect of the invention, the tire sidewall portion comprises a barrier layer for the colored strip, which barrier layer is generally disposed between the colored strip and the sidewall rubber layer. The rubber composition of the sidewall layers, or parts thereof such as a barrier layer, is preferably non-staining and provided to prevent the transfer there through of antioxidants and/or other staining or discoloring pigments in tire sidewall stocks. Preferred rubber compositions for the sidewall layers or parts thereof such as a barrier layer comprise halogen containing rubber compositions such as chlorobutyl-based rubber compositions or any other halobutyl-based rubber composition.

The invention also relates to a vehicle tire having a colored sidewall according to claim 10.

Another aspect of the invention relates to a vehicle tire wherein the strip of colored rubber compound covers at least 50% of the external surface of the sidewall region of the tire maintaining a minimum distance to the wing tip of the tire of 5 mm, and even more preferred wherein the strip of colored rubber compound covers at least 75% of the external surface of the sidewall region of the tire.

Yet another aspect of the invention is the provision of a vehicle tire wherein the thickness of the side wall rubber layer underneath the colored rubber strip between the carcass layer and the underside of the colored rubber strip is lower than 5 mm, and more preferably lower than 2 mm.

The method of the invention allows to provide a tire having a colored sidewall according to numerous and varying designs, colors, configurations, and the like, in which tire integrity is enhanced by reduction of the number of components comprising the decorative portion, and wherein colored sidewall portion is co-cured or vulcanized with the tire to provide a strong bond.

### DESCRIPTION OF DRAWINGS

The invention will now be described in more detail by the following embodiments and accompanying figures without however being limited thereto. In the figures:
Figure 1 schematically shows a perspective view of a cross-sectional part of a tire according to an embodiment of the invention;
Figure 2 schematically shows a partial cross sectional view of a tire sidewall of the tire of Figure 1 in an uncured state;
Figure 3 schematically shows the partial cross section of the tire sidewall shown in Figure 2 as cured in a mold;
Figure 4 schematically shows the partial cross section of the tire sidewall shown in Figure 3 after demolding from the mold; and
Figure 5 schematically shows the partial cross section of the tire sidewall shown in Figure 4 in its final state.

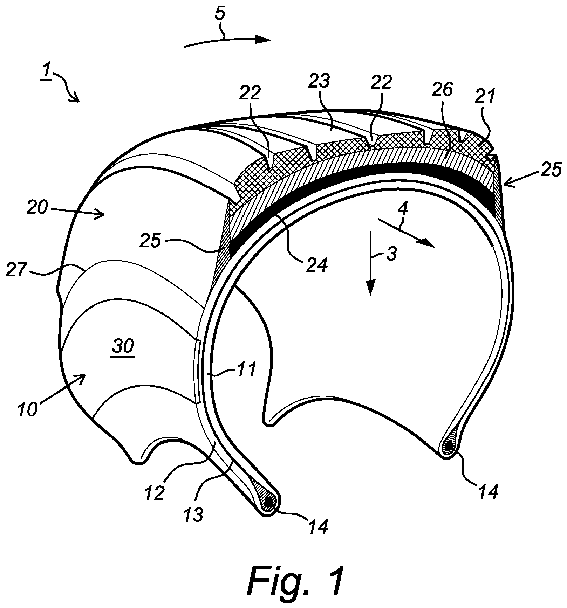

Referring to figure 1, tire 1 comprises a sidewall portion 10 of a rubber polymer and a tread portion 20 that may be composed of different parts as elucidated below. The sidewall portion 10 comprises a white wall section 30. The tread portion 20 of the embodiment shown comprises a tread layer 21 that provides a ground contacting surface 23 disposed in a radially outward part of the tread portion 20. The tread layer 21 is provided with longitudinal grooves 22 and possibly transverse grooves (not shown). The tread portion 20 may further comprise a tread base layer 26 arranged underneath the tread layer 21, and optionally an undertread layer 24 that provides a good bond with the underlying layers of the tire 1. At the sides of the tread portion 20, wing tips 25 are provided which may be made of conductive or poorly conductive rubber. In the embodiment shown, sidewall portion 10 is provided with an inner layer 11 of a rubber that may differ from the rubber used in an outer coating layer 12. A carcass layer 13 of preferably steel, nylon, rayon or polyester cords is embedded in layer 12 and mechanically connected to the bead region 14.

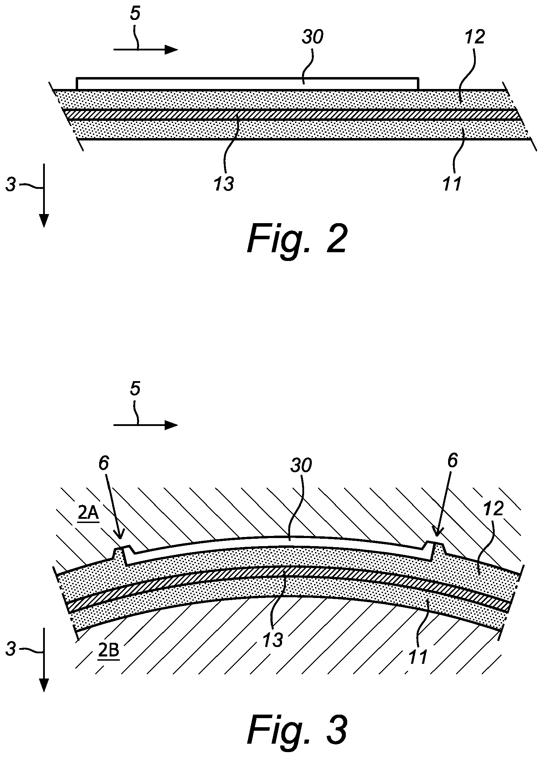

According to an embodiment of the invention, the tire 1 having a white sidewall portion 30 is manufactured by disposing a strip 30 of a white rubber compound circumferentially (in the direction 4, seen figure 1) about the external surface of the sidewall region 10 of the tire 1 in its uncured state, as shown in figure 2. This assembly (11, 12, 13, 30) is then placed in a tire curing mold 2 comprising a radially outer mold half 2A and a radially inner mold half 2B which generally takes the form of an inflatable bladder. The side wall assembly (11, 12, 13, 30) is positioned in the mold 2 with the strip 30 exposed to direct contact with mold half 2A. According to the invention, the mold 2 is provided with recesses 6 (for instance in the form of grooves) at both sides of the rubber strip 30, which recesses 6 run in the circumferential direction 4 of the tire. The strip 30 is positioned in the mold 2 such that it slightly overlaps with the recesses 6 in the radial direction 5 of the tire 1. The assembly is then cured (vulcanized) whereby radial side parts of the strip 30 flow into the recesses 6, as shown in figure 3, to form circumferential protrusions 7 in the strip 30. Curing the assembly (11, 12, 13, 30) in the mold 2 involves bringing the assembly under pressure and a high temperature, in which process the rubber layers flow and consolidate in the mold 2 to form a molded tire 1 or part of a tire. The tire 1, having been molded and cured, is removed from the mold 2 and is then mounted and inflated.

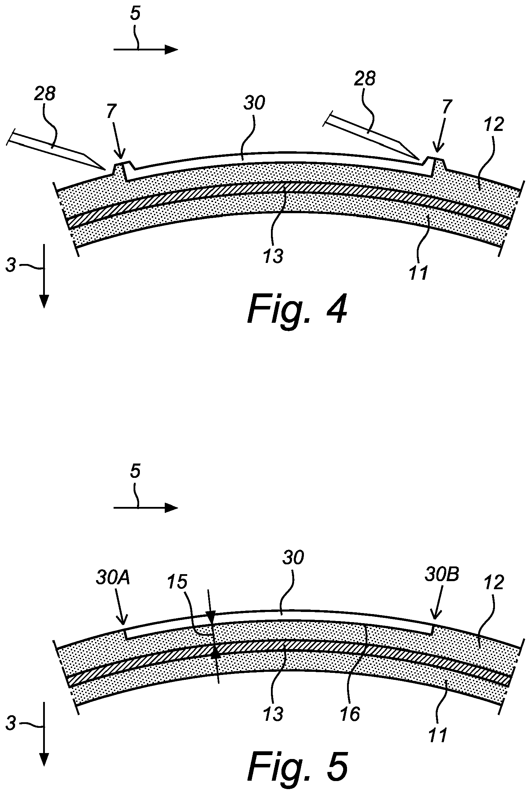

After removing the thus formed tire 1 from the mold 2, the protrusions 7 are removed by cutting them by means of cutters 28 in a direction which is about tangential to the sidewall surface, as shown in figure 4. In this way sharp and well defined edges (30A, 30B) are formed, and the colored strip 30 in the sidewall will have a characteristic clean and well defined appearance. The cutting means 28 are preferably mounted on a rotating disc (not shown). In the embodiment shown in figure 5, the protrusions have been removed substantially completely. It is however within the scope of the invention to remove the protrusions only partially, in which process a part of the protrusions is left in the finished tire.

Preferably, the tire sidewall portion 10 comprises a barrier layer for the strip 30, which barrier layer is generally disposed between the colored or white strip 30 and the sidewall rubber layer 12. The rubber of the sidewall layers 11 and/or 12, or parts thereof such as a barrier layer, is preferably non-staining and provided to prevent the transfer there through of antioxidants and/or other staining or discoloring pigments in tire sidewall stocks. Preferred rubber compounds comprise halogen containing rubber compounds such as chlorobutyl-based rubber compounds or any other halobutyl-based rubber compounds.

The white or colored strip 30 itself is preferably made of a mixture of EPDM, chlorobutyl rubber compound, and natural rubber. It is most preferred that the strip 30, and optionally any barrier layer associated with it is uncured or only partially cured to a degree necessary to facilitate handling. This uncured or partially cured state allows for ease of vulcanization bonding to the tire during the curing process.

The colored strip 30 can have a widely varying thickness but a typical thickness ranges from 0,5 to 5 mm, more preferably from 1 to 4 mm, and most preferably from 2 to 3 mm. The width of the strip 30 may also vary within a large range but will preferably exceed 1 mm, more preferably 5 mm, and most preferably 20 mm.

According to a preferred embodiment, the strip 30 of colored rubber compound is disposed to cover at least 50%, and more preferably at least 75%, of the external surface of the sidewall region 10 of the tire 1 maintaining a minimum distance to the (underside of the) wing tip 25 of 5 mm. This makes it possible to apply large markings to the colored strip 30 of sidewall region 10. The sidewall region 10 extends from the bead region 14 to the lower ridge 27 of the wing tips 25.

The method according to the invention also allows to produce a tire 1 wherein the thickness 15 (see figure 5) of the side wall rubber layer 12 that is provided underneath the colored rubber strip 30 between the carcass layer 13 and the underside 16 of the colored rubber strip 30 is lower than 5 mm, and preferably lower than 2 mm.

The method according to the invention provides a tire having a sidewall (11, 12, 13) underlying the white or colored strip 30 of preferably non-staining black rubber compound that is completely free of any white or colored material therein. This lowers the risk for accidental spoiling of the appearance of the tire by scuffing of the sidewall. By providing the colored strip at least 5 mm away from the wing tip rubber satisfactorily protects the white or colored surface from staining or discoloration.

The present invention provides a number of other advantages. In particular, the use of the thin strip 30 of white or colored compound requires a materially smaller amount of relatively high-cost white or colored material. Moreover, the entire outward surface of the white or colored rubber compound is exposed and no white material is buried in the sidewall layers or otherwise covered as is often the case with prior art methods. Hence, there is no risk that additional white may be accidentally exposed by minor damage to a tire thereby rendering the surface appearance thereof unsatisfactory.

Also, the structural integrity of the underlying sidewall is not affected by the presence therein of white rubber compound.

It will be understood that the invention as disclosed in the detailed description is only given by way of example and that many variations may be envisaged by the skilled person within the scope of the appended claims.

## Claims

1. A method of manufacturing a tire (1) having a colored sidewall (10) comprising disposing a strip (30) of a colored rubber compound circumferentially about the external surface of the sidewall (10) region of the tire (1) in its uncured state, placing the uncured tire in a tire curing mold (2) with the strip (30) exposed to direct contact with the mold (2), whereby the mold (2) is provided with circumferential recesses (6) at both sides of the colored rubber strip (30) and the strip (30) slightly overlaps with the recesses (6) in the radial direction (5) of the tire (1), curing the tire (1) whereby circumferential side parts of the colored rubber strip (30) flow into the recesses (6) to form circumferential protrusions (7) in the strip (30), removing the tire (1) from the mold (2), and removing the protrusions (7) at least partially,
**characterized in that**
the sidewall (10) is made of a rubber composition comprising from 5-30 wt% of EPDM rubber, from 5-30 wt% of halobutyl rubber, preferably chlorobutyl rubber, from 5-30 wt% of natural rubber, and from 5-30 wt% of butadiene rubber on a total of 100 wt%, the remaining wt% comprising pigments and other additives, and vulcanization chemicals and aids.

2. Method according to claim 1, wherein removing the protrusions (7) is performed by cutting.

3. Method according to claim 1 or 2, wherein the colored rubber strip (30) is made of a rubber composition comprising from 1-10 wt% of EPDM rubber, from 10 -30 wt% of halobutyl rubber, preferably chlorobutyl rubber, and from 15-35 wt% of natural rubber on a total wt% of 100 wt%, the remaining wt% comprising pigments and other additives, and vulcanization chemicals and aids.

4. Method according to any one of the preceding claims, wherein the colored rubber strip (30) is disposed to cover at least 50% of the external surface of the sidewall (10) region of the tire (1) maintaining a minimum distance to the wing tip (25) of the tire (1) of 5 mm.

5. Method according to any one of the preceding claims, wherein the thickness of the side wall rubber layer underneath the colored rubber strip (30) between the carcass layer (13) and the underside of the colored rubber strip (30) is lower than 5 mm.

6. Method according to claim 5, wherein the thickness of the side wall (10) rubber layer underneath the colored rubber strip (30) between the carcass layer (13) and the underside of the colored rubber strip (30) is lower than 2 mm.

7. Method according to any one of the preceding claims, wherein the strip (30) of colored rubber compound is formed by winding a plurality of colored rubber bands circumferentially about the external surface of the sidewall region (10) of the tire in close proximity to each other.

8. Method according to claim 7, wherein the plurality of colored rubber bands are wound in touching proximity to each other.

9. Method according to claim 7 or 8, wherein the bands are urged to change shape by stretching an outer circumferential edge of each band without stretching an inner circumferential edge thereof.

10. A vehicle tire (1) having a colored sidewall (10) in the form of a sharply delineated strip (30) disposed circumferentially about the external surface of the sidewall (10) region of the tire (1),
**characterized in that**
the sidewall rubber composition comprises from 5-30 wt% of EPDM rubber, from 5-30 wt% of halobutyl rubber, preferably chlorobutyl rubber, from 5-30 wt% of natural rubber, and from 5-30 wt% of butadiene rubber on a total of 100 wt%, the remaining wt% comprising pigments and other additives, and vulcanization chemicals and aids.

11. Vehicle tire according to claim 10, wherein the strip of colored rubber compound covers at least 50% of the external surface of the sidewall region of the tire maintaining a minimum distance to the wing tip of the tire of 5 mm.

12. Vehicle tire according to claim 11, wherein the strip (30) of colored rubber compound covers at least 75% of the external surface of the sidewall (10) region of the tire (1).

13. Vehicle tire according to any one of claims 10-12, wherein the thickness of the side wall (10) rubber layer underneath the colored rubber strip (30) between a carcass layer (13) of the tire (1) and the underside of the colored rubber strip (30) is lower than 5 mm.

14. Vehicle tire according to claim 13, wherein the thickness of the side wall (10) rubber layer underneath the colored rubber strip (30) between the carcass layer (13) and the underside of the colored rubber strip (30) is lower than 2 mm.

## Patentansprüche

1. Verfahren zur Herstellung eines Reifens (1) mit einer gefärbten Seitenwand (10), umfassend Anordnen eines Streifens (30) aus einem gefärbten Kautschukcompound im Umkreis um die Außenfläche der Region der Seitenwand (10) des Reifens (1) herum in seinem unvulkanisierten Zustand, Platzieren des unvulkanisierten Reifens in einer Reifenvulkanisierform (2), wobei der Streifen (30) direktem Kontakt mit der Form (2) ausgesetzt ist, wobei die Form (2) mit Umkreisvertiefungen (6) an beiden Seiten des gefärbten Kautschukstreifens (30) versehen ist und der Streifen (30) geringfügig mit den Vertiefungen (6) in der radialen Richtung (5) des Reifens (1) überlappt, Vulkanisieren des Reifens (1), wodurch Umkreisseitenteile des gefärbten Kautschukstreifens (30) in die Vertiefungen (6) fließen, um Umkreisvorsprünge (7) in dem Streifen (30) zu bilden, Entfernen des Reifens (1) aus der Form (2) und mindestens teilweises Entfernen der Vorsprünge (7),
**dadurch gekennzeichnet, dass**
die Seitenwand (10) aus einer Kautschukzusammensetzung hergestellt ist, die bezogen auf insgesamt 100 Gew.% 5-30 Gew.% EPDM-Kautschuk, 5-30 Gew.% Halogenbutylkautschuk, vorzugsweise Chlorbutylkautschuk, 5-30 Gew.% Naturkautschuk und 5-30 Gew.% Butadienkautschuk umfasst, wobei die verbleibenden Gew.% Pigmente und andere Additive sowie Vulkanisierungschemikalien und Hilfsmittel umfassen.

2. Verfahren nach Anspruch 1, wobei das Entfernen der Vorsprünge (7) durch Schneiden durchgeführt wird.

3. Verfahren nach Anspruch 1 oder 2, wobei der gefärbte Kautschukstreifen (30) aus einer Kautschukzusammensetzung hergestellt ist, die bezogen auf insgesamt 100 Gew.% 1-10 Gew.% EPDM-Kautschuk, 10-30 Gew.% Halogenbutylkautschuk, vorzugsweise Chlorbutylkautschuk, und 15-35 Gew.% Naturkautschuk umfasst, wobei die verbleibenden Gew.% Pigmente und andere Additive sowie Vulkanisierungschemikalien und Hilfsmittel umfassen.

4. Verfahren nach einem der vorhergehenden Ansprüche, wobei der gefärbte Kautschukstreifen (30) so angeordnet ist, dass mindestens 50 % der Außenfläche der Region der Seitenwand (10) des Reifens (1) bedeckt sind, wobei ein Mindestabstand zu dem Schutzrand (25) des Reifens (1) von 5 mm aufrechterhalten wird.

5. Verfahren nach einem der vorhergehenden Ansprüche, wobei die Dicke der Kautschukschicht der Seitenwand unterhalb des gefärbten Kautschukstreifens (30) zwischen der Karkassenschicht (13) und der Unterseite des gefärbten Kautschukstreifens (30) kleiner als 5 mm ist.

6. Verfahren nach Anspruch 5, wobei die Dicke der Kautschukschicht der Seitenwand (10) unterhalb des gefärbten Kautschukstreifens (30) zwischen der Karkassenschicht (13) und der Unterseite des gefärbten Kautschukstreifens (30) kleiner als 2 mm ist.

7. Verfahren nach einem der vorhergehenden Ansprüche, wobei der Streifen (30) aus gefärbtem Kautschukcompound durch Wickeln einer Vielzahl gefärbter Kautschukbänder im Umkreis um die Außenfläche der Seitenwandregion (10) des Reifens in enger Nähe zueinander gebildet wird.

8. Verfahren nach Anspruch 7, wobei die Vielzahl gefärbter Kautschukbänder in Berührungsnähe zueinander gewickelt wird.

9. Verfahren nach Anspruch 7 oder 8, wobei die Bänder zur Formänderung veranlasst werden, indem ein äußerer Umkreisrand jedes Bandes gestreckt wird, ohne dessen inneren Umkreisrand zu strecken.

10. Fahrzeugreifen (1) mit einer gefärbten Seitenwand (10) in Form eines scharf abgegrenzten Streifens (30), der im Umkreis um die Außenfläche der Region der Seitenwand (10) des Reifens (1) angeordnet ist,
**dadurch gekennzeichnet, dass**
die Seitenwandkautschukzusammensetzung bezogen auf insgesamt 100 Gew.% 5-30 Gew.% EPDM-Kautschuk, 5-30 Gew.% Halogenbutylkautschuk, vorzugsweise Chlorbutylkautschuk, 5-30 Gew.% Naturkautschuk und 5-30 Gew.% Butadienkautschuk umfasst, wobei die verbleibenden Gew.% Pigmente und andere Additive sowie Vulkanisierungschemikalien und Hilfsmittel umfassen.

11. Fahrzeugreifen nach Anspruch 10, wobei die Streifen aus gefärbtem Kautschukcompound mindestens 50 % der Außenfläche der Seitenwandregion des Reifens bedecken, wobei ein Mindestabstand zu dem Schutzrand des Reifens von 5 mm aufrechterhalten wird.

12. Fahrzeugreifen nach Anspruch 11, wobei der Streifen (30) aus gefärbtem Kautschukcompound mindestens 75 % der Außenfläche der Region der Seitenwand (10) des Reifens (1) bedeckt.

13. Fahrzeugreifen nach einem der Ansprüche 10-12, wobei die Dicke der Kautschukschicht der Seitenwand (10) unterhalb des gefärbten Kautschukstreifens (30) zwischen einer Karkassenschicht (13) des Reifens (1) und der Unterseite des gefärbten Kautschukstreifens (30) kleiner als 5 mm ist.

14. Fahrzeugreifen nach Anspruch 13, wobei die Dicke der Kautschukschicht der Seitenwand (10) unterhalb des gefärbten Kautschukstreifens (30) zwischen der Karkassenschicht (13) und der Unterseite des gefärbten Kautschukstreifens (30) kleiner als 2 mm ist.

## Revendications

1. Procédé de fabrication d'un pneumatique (1) ayant un flanc coloré (10) comprenant la disposition d'une bandelette (30) d'un composé de caoutchouc coloré de façon circonférentielle autour de la surface externe de la région de flanc (10) du pneumatique (1) dans son état non durci, la mise en place du pneumatique non durci dans un moule de durcissement de pneu (2) avec la bandelette (30) exposée à un contact direct avec le moule (2), moyennant quoi le moule (2) est pourvu d'évidements circonférentiels (6) des deux côtés de la bandelette de caoutchouc coloré (30) et la bandelette (30) chevauche légèrement les évidements (6) dans la direction radiale (5) du pneumatique (1), le durcissement du pneumatique (1), moyennant quoi des parties latérales circonférentielles de la bandelette de caoutchouc coloré (30) s'écoulent dans les évidements (6) pour former des protubérances circonférentielles (7) dans la bandelette (30), l'enlèvement du pneumatique (1) du moule (2), et l'enlèvement au moins partiel des protubérances (7),
**caractérisé en ce que**
le flanc (10) est réalisé en une composition de caoutchouc comprenant de 5 à 30 % en poids de caoutchouc EPDM, de 5 à 30 % en poids de caoutchouc halogénobutyle, de préférence du caoutchouc chlorobutyle, de 5 à 30 % en poids de caoutchouc naturel, et de 5 à 30 % en poids de caoutchouc butadiène sur un total de 100 % en poids, le pourcentage restant en poids comprenant des pigments et d'autres additifs, et des produits chimiques et supports de vulcanisation.

2. Procédé selon la revendication 1, dans lequel l'enlèvement des protubérances (7) est réalisé par découpe.

3. Procédé selon la revendication 1 ou 2, dans lequel la bandelette de caoutchouc coloré (30) est réalisée en une composition de caoutchouc comprenant de 1 à 10 % en poids de caoutchouc EPDM, de 10 à 30 % en poids de caoutchouc halogénobutyle, de préférence du caoutchouc chlorobutyle, et de 15 à 35 % en poids de caoutchouc naturel sur un pourcentage en poids total de 100 % en poids, le pourcentage en poids restant comprenant des pigments et d'autres additifs, et des produits chimiques et supports de vulcanisation.

4. Procédé selon l'une quelconque des revendications précédentes, dans lequel la bandelette de caoutchouc coloré (30) est disposée pour couvrir au moins 50 % de la surface externe de la région de flanc (10) du pneumatique (1) en maintenant une distance minimale jusqu'au bout de l'aile (25) du pneumatique (1) de 5 mm.

5. Procédé selon l'une quelconque des revendications précédentes, dans lequel l'épaisseur de la couche de caoutchouc de flanc en dessous de la bandelette de caoutchouc coloré (30) entre la couche de carcasse (13) et la surface de la bandelette de caoutchouc coloré (30) est inférieure à 5 mm.

6. Procédé selon la revendication 5, dans lequel l'épaisseur de la couche de caoutchouc de flanc (10) en dessous de la bandelette de caoutchouc coloré (30) entre la couche de carcasse (13) et la surface de la bandelette de caoutchouc coloré (30) est inférieure à 2 mm.

7. Procédé selon l'une quelconque des revendications précédentes, dans lequel la bandelette (30) de composé de caoutchouc coloré est formée par enroulement d'une pluralité de bandelettes de caoutchouc coloré de façon circonférentielle autour de la surface externe de la région de flanc (10) du pneumatique à proximité étroite les unes des autres.

8. Procédé selon la revendication 7, dans lequel la pluralité de bandelettes de caoutchouc coloré sont enroulées à proximité de contact physique les unes des autres.

9. Procédé selon la revendication 7 ou 8, dans lequel les bandelettes sont poussées à changer de forme en étirant un bord circonférentiel extérieur de chaque bandelette sans étirer un bord circonférentiel intérieur de celle-ci.

10. Pneumatique de véhicule (1) ayant un flanc coloré (10) sous forme d'une bandelette nettement délimitée (30) disposée de façon circonférentielle autour de la surface externe de la région de flanc (10) du pneumatique (1),
**caractérisé en ce que**
la composition de caoutchouc de flanc comprend de 5 à 30 % en poids de caoutchouc EPDM, de 5 à 30 % en poids de caoutchouc halogénobutyle, de préférence du caoutchouc chlorobutyle, de 5 à 30 % en poids de caoutchouc naturel, et de 5 à 30 % en poids de caoutchouc butadiène sur un total de 100 % en poids, le pourcentage en poids restant comprenant des pigments et d'autres additifs, et des produits chimiques et supports de vulcanisation.

11. Pneumatique de véhicule selon la revendication 10, dans lequel la bandelette de composé de caoutchouc coloré couvre au moins 50 % de la surface externe de la région de flanc du pneumatique en maintenant une distance minimale jusqu'au bout de l'aile du pneumatique de 5 mm.

12. Pneumatique de véhicule selon la revendication 11, dans lequel la bandelette (30) de composé de caoutchouc coloré couvre au moins 75 % de la surface externe de la région de flanc (10) du pneumatique (1).

13. Pneumatique de véhicule selon l'une quelconque des revendications 10 à 12, dans lequel l'épaisseur de la couche de caoutchouc de flanc (10) en dessous de la bandelette de caoutchouc coloré (30) entre une couche de carcasse (13) du pneumatique (1) et le dessous de la bandelette de caoutchouc coloré (30) est inférieure à 5 mm.

14. Pneumatique de véhicule selon la revendication 13, dans lequel l'épaisseur de la couche de caoutchouc de flanc (10) en dessous de la bandelette de caoutchouc coloré (30) entre la couche de carcasse (13) et la surface de la bandelette de caoutchouc coloré (30) est inférieure à 2 mm.
